# EUROPÄISCHE PATENTANMELDUNG

(11) **EP 4 273 005 A1**
(43) Veröffentlichungstag der Anmeldung: **08.11.2023**
(21) Anmeldenummer: 22171924.8
(22) Anmeldetag: 05.05.2022
(51) Int. Cl.: B60R 16/03

(54) **NUTZFAHRZEUGANHÄNGER MIT EINEM BORDNETZ**

(71) Anmelder: Schmitz Cargobull AG, 48341 Altenberge (DE)
(72) Erfinder: HONKOMP, Dieter, 49439 Steinfeld (DE); RÜBIG, Michael, 77830 Bühlertal (DE); KÜSTERS, John, 48691 Vreden (DE); GEIGER, Fabian, 76461 Muggensturm (DE)
(74) Vertreter: Cohausz & Florack

(57) **Zusammenfassung**

Es wird unter anderem ein Nutzfahrzeuganhänger mit einem Bordnetz offenbart, wobei das Bordnetz eine Steuereinheit mit einer ersten Spannungswandlervorrichtung umfasst, wobei elektrische Energie zum Betreiben zumindest eines an die Steuereinheit angeschlossenen Verbrauchers in einem ersten Betriebszustand der Steuereinheit über eine Energieversorgungsverbindung bereitgestellt wird, über die das Bordnetz zumindest im ersten Betriebszustand mit einer elektrischen Energiequelle eines elektronischen Bremssystems des Nutzfahrzeuganhängers verbunden ist, wobei elektrische Energie zum Betreiben des zumindest einen Verbrauchers in einem zweiten Betriebszustand der Steuereinheit durch einen elektrischen Energiespeicher des Nutzfahrzeuganhängers bereitgestellt wird, und wobei die erste Spannungswandlervorrichtung eingerichtet ist:
- ein mit der Energieversorgungsverbindung verbundenes erstes Massepotential von einem mit dem elektrischen Energiespeicher des Nutzfahrzeuganhängers verbundenen zweiten Massepotential zu entkoppeln.

## Beschreibung

### Gebiet

Die Erfindung betrifft einen Nutzfahrzeuganhänger mit einem Bordnetz.

### Hintergrund

Moderne Nutzfahrzeuganhänger wie beispielsweise Sattelauflieger umfassen oft elektronische Komponenten und Systeme, wie beispielsweise Telematiksysteme. Beispielsweise können Sensoren des Nutzfahrzeuganhängers Daten des Nutzfahrzeuganhängers erfassen und über ein Telematiksystem einem Verwender des Nutzfahrzeuganhängers bereitstellen. Daten können hierbei Informationen über Komponenten des Nutzfahrzeuganhängers umfassen, so dass beispielsweise Verschleiß von solchen Komponenten frühzeitig erkannt werden kann. Auch kann ein Telematiksystem verwendet werden, eine Auslastung des Nutzfahrzeuganhängers beim Transportieren von Gütern zu überwachen, so dass der Nutzfahrzeuganhänger hinsichtlich Verschleiß und Kraftstoffverbrauch optimiert verwendet werden kann.

Solche elektronischen Systeme können als Verbraucher eines Bordnetzes des Nutzfahrzeuganhängers beispielsweise über eine elektrische Energiequelle eines Zugfahrzeugs mit elektrischer Energie versorgt werden, wenn der Nutzfahrzeuganhänger mit dem Zugfahrzeug verbunden ist. Zur Erhöhung der Flexibilität und um gegebenenfalls Emissionen vermindern zu können, kann zusätzlich ein Energiespeicher des Nutzfahrzeuganhängers, beispielsweise eine elektrische Batterie, zur Energieversorgung hinzugezogen werden. Allerdings ist es insbesondere aus Sicherheitsgründen nötig, dass ein Massepotential, das im verbundenen Zustand zwischen Zugfahrzeug und Nutzfahrzeuganhänger mit der elektrischen Energiequelle des Zugfahrzeugs, und damit üblicherweise auch mit einem elektronischen Bremssystem des Nutzfahrzeuganhängers, verbunden ist, von einem Massepotential der elektrischen Batterie getrennt ist.

### Zusammenfassung einiger beispielhafter Ausführungsformen der Erfindung

Eine Aufgabe der vorliegenden Erfindung ist es vor diesem Hintergrund, einen Nutzfahrzeuganhänger mit einem Bordnetz derart auszugestalten und weiterzubilden, dass zumindest ein Verbraucher des Bordnetzes mit elektrischer Energie von einer elektrischen Energiequelle eines elektronischen Bremssystems des Nutzfahrzeuganhängers und mit elektrischer Energie von einen elektrischen Energiespeicher des Nutzfahrzeuganhängers versorgt werden kann.

Gemäß der Erfindung wird ein Nutzfahrzeuganhänger mit einem Bordnetz offenbart, wobei das Bordnetz eine Steuereinheit mit einer ersten Spannungswandlervorrichtung umfasst, wobei elektrische Energie zum Betreiben zumindest eines an die Steuereinheit angeschlossenen Verbrauchers in einem ersten Betriebszustand der Steuereinheit über eine Energieversorgungsverbindung bereitgestellt wird, über die das Bordnetz zumindest im ersten Betriebszustand mit einer elektrischen Energiequelle eines elektronischen Bremssystems des Nutzfahrzeuganhängers verbunden ist, wobei elektrische Energie zum Betreiben des zumindest einen Verbrauchers in einem zweiten Betriebszustand der Steuereinheit durch einen elektrischen Energiespeicher des Nutzfahrzeuganhängers bereitgestellt wird, und wobei die erste Spannungswandlervorrichtung eingerichtet ist:
- ein mit der Energieversorgungsverbindung verbundenes erstes Massepotential von einem mit dem elektrischen Energiespeicher des Nutzfahrzeuganhängers verbundenen zweiten Massepotential zu entkoppeln.

Es versteht sich hierbei, dass im zweiten Betriebszustand der Steuereinheit Energie zum Betreiben des zumindest einen Verbrauchers zusätzlich auch über die Energieversorgungsverbindung bereitgestellt werden kann, und dass im ersten Betriebszustand der Steuereinheit Energie zum Betreiben des zumindest einen Verbrauchers zusätzlich auch durch den elektrischen Energiespeicher des Nutzfahrzeuganhängers bereitgestellt werden kann. In einer beispielhaften Ausführungsform wird im ersten Betriebszustand mehr als 50% der elektrischen Energie zum Betreiben des zumindest einen an die Steuereinheit angeschlossenen Verbrauchers über die Energieversorgungsverbindung bereitgestellt, über die das Bordnetz zumindest im ersten Betriebszustand mit der elektrischen Energiequelle des elektronischen Bremssystems des Nutzfahrzeuganhängers verbunden ist. In einer beispielhaften Ausführungsform wird im zweiten Betriebszustand mehr als 50% der elektrischen Energie zum Betreiben des zumindest einen Verbrauchers durch den elektrischen Energiespeicher des Nutzfahrzeuganhängers bereitgestellt.

Im Folgenden werden Eigenschaften des offenbarten Nutzfahrzeuganhängers mit dem Bordnetz - teilweise beispielhaft - beschrieben.

Ein Nutzfahrzeuganhänger ist zum Beispiel ein Anhänger für ein Zugfahrzeug, in einer beispielhaften Ausführungsform für einen Lastkraftwagen, wie ein Sattelauflieger, insbesondere ein Sattelauflieger mit einem Kofferaufbau. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden. In beispielhaften Ausführungsformen ist der Nutzfahrzeuganhänger ein Sattelauflieger.

Das Bordnetz kann allgemein elektrische Komponenten umfassen, die für die Versorgung des zumindest einen Verbrauchers mit elektrischer Energie und/oder für einen Informationsfluss, beispielsweise von einem Telematiksystem als beispielhafter Verbraucher, verwendet werden können. Es versteht sich, dass das Bordnetz neben den hier explizit beschriebenen Komponenten noch weitere Komponenten wie insbesondere elektrische Leitungen umfassen kann.

Das Bordnetz umfasst eine Steuereinheit, die zumindest die Versorgung des zumindest einen Verbrauchers mit elektrischer Energie regelt. Die Steuereinheit ist in beispielhaften Ausführungsformen so eingerichtet, dass sie den ersten Betriebszustand, in dem der zumindest eine Verbraucher (zumindest die meiste) elektrische Energie über die Energieversorgungsverbindung bezieht, und den zweiten Betriebszustand, in dem der zumindest eine Verbraucher (zumindest die meiste) elektrische Energie aus dem elektrischen Energiespeicher bezieht, ermöglicht. Beispielsweise kann die Steuereinheit so eingerichtet sein, dass in einem Fall, in dem der Nutzfahrzeuganhänger nicht mit einem Zugfahrzeug gekoppelt ist, und das Bordnetz dann nicht mit einer Lichtmaschine des Zugfahrzeugs als beispielhafte Energiequelle des elektronischen Bremssystems verbunden ist, ein an die Steuereinheit angeschlossener Verbraucher elektrische Energie automatisch aus dem elektrischen Energiespeicher des Nutzfahrzeugs bezieht. Die Steuereinheit kann weiter so eingerichtet sein, dass in einem Fall, in dem das Bordnetz mit der elektrischen Energiequelle des elektronischen Bremssystems elektrisch verbunden ist, ein an die Steuereinheit angeschlossener Verbraucher elektrische Energie über die Energieversorgungsverbindung von der elektrischen Energiequelle des elektronischen Bremssystems bezieht, während gleichzeitig der Energiespeicher des Nutzfahrzeuganhängers über die Energieversorgungsverbindung aufgeladen wird. Die Steuereinheit kann aber weiter auch so eingerichtet sein, dass ein an die Steuereinheit angeschlossener Verbraucher elektrische Energie aus dem elektrischen Energiespeicher des Nutzfahrzeugs bezieht, auch wenn das Bordnetz mit der elektrischen Energiequelle des elektronischen Bremssystems verbunden ist. Die Steuereinheit kann beispielsweise so eingerichtet sein, dass sowohl über die Energieversorgungsverbindung als auch über den elektrischen Energiespeicher ein Spannungs- und/oder Energieabfall an der jeweils anderen elektrischen Energiequelle durch die Energieversorgungsverbindung oder den elektrischen Energiespeicher kompensiert werden kann. In beispielhaften Ausführungsformen umfasst die Energieversorgungsverbindung ein elektrisches Kopplungssystem des Nutzfahrzeuganhängers an ein Zugfahrzeug.

Während in beispielhaften Ausführungsformen die Energiequelle des elektronischen Bremssystems eine Energiequelle des Zugfahrzeugs wie beispielsweise eine Lichtmaschine oder eine aufladbare Batterie ist, kann in beispielhaften Ausführungsformen die Energiequelle des elektronischen Bremssystems alternativ oder zusätzlich eine Komponente des Nutzfahrzeuganhängers sein. Das elektronische Bremssystem kann beispielsweise von einer 24V-Energiequelle des Zugfahrzeugs versorgt werden, wofür eine geeignete elektrische Verbindung (Energieversorgungsverbindung) zwischen Zugfahrzeug und Nutzfahrzeuganhänger vorgesehen sein kann. Somit entspricht in beispielhaften Ausführungsformen ein Massebezug für diese Energiequelle dem ersten Massepotential, wobei eine Umsetzung dieses ersten Massepotential auf ein Massepotential des Nutzfahrzeuganhängers (zweites Massepotential) in beispielhaften Ausführungsformen über einen galvanisch getrennten DCDC-Wandler (ein Beispiel einer ersten Spannungswandlervorrichtung) erfolgt.

In beispielhaften Ausführungsformen kann die Energiequelle des Nutzfahrzeuganhängers einen elektrischen Generator des elektronischen Bremssystems umfassen, über den beim Fahren und/oder beim Bremsen Energie gewonnen wird. Diese Energie kann zum Aufladen des elektrischen Energiespeichers und/oder zum Betreiben des zumindest einen an die Steuereinheit angeschlossenen Verbrauchers verwendet werden.

Die Steuereinheit kann weitere Funktionen des Nutzfahrzeuganhängers ermöglichen und/oder überwachen. So umfasst in einer beispielhaften Ausführungsform der zumindest eine Verbraucher ein Telematiksystem des Nutzfahrzeuganhängers, wobei die Steuereinheit neben der Energieversorgung des Telematiksystems auch einen Informationsfluss (beispielsweise Signalübertragung von an das Telematiksystem angeschlossenen Sensoren) vom Telematiksystem überwacht. In einer beispielhaften Ausführungsform umfasst die Steuereinheit eine Body Control Unit (BCU). Alternativ oder zusätzlich umfasst in einer beispielhaften Ausführungsform der zumindest eine Verbraucher ein elektronisches Schließsystem des Nutzfahrzeuganhängers.

Die Steuereinheit umfasst eine erste Spannungswandlervorrichtung, wobei eine Spannungswandlervorrichtung insbesondere dazu dienen kann, eine durch eine elektrische Energiequelle bereitgestellte Spannung in eine zum Betreiben eines jeweiligen Verbrauchers notwendige und/oder geeignete Spannung zu wandeln. Insbesondere dient die erste Spannungswandlervorrichtung in einer beispielhaften Ausführungsform dazu, eine Spannung, die an der Energieversorgungsverbindung anliegt, in eine Spannung zu wandeln, die zum Betreiben des zumindest einen Verbrauchers notwendig und/oder geeignet ist, zu wandeln. In einer beispielhaften Ausführungsform dient die erste Spannungswandlervorrichtung zur galvanischen Trennung des mit der Energieversorgungsverbindung verbundenen Massepotentials von einem mit dem elektrischen Energiespeicher verbundenen Massepotential.

In dem ersten Betriebszustand der Steuereinheit wird elektrische Energie zum Betreiben des zumindest einen Verbrauchers über die Energieversorgungsverbindung bereitgestellt. Über die Energieversorgungsverbindung ist das Bordnetz zumindest im ersten Betriebszustand mit der elektrischen Energiequelle des elektronischen Bremssystems des Nutzfahrzeuganhängers verbunden. In einer beispielhaften Ausführungsform ist die elektrische Energiequelle eine Energiequelle (beispielsweise eine Lichtmaschine und/oder eine aufladbare Batterie) des Zugfahrzeugs.

Hierbei kann in beispielhaften Ausführungsformen über die Energieversorgungsverbindung mehr Energie bereitgestellt werden, als der zumindest eine Verbraucher verbraucht, so dass über die Energieversorgungsverbindung gleichzeitig der elektrische Energiespeicher geladen werden kann. In alternativen Ausführungsformen kann der Verbraucher mehr elektrische Energie benötigen, als über die Energieversorgungsverbindung bereitgestellt wird, so dass zusätzlich nötige elektrische Energie über den elektrischen Energiespeicher bereitgestellt wird.

Eine elektrische Energiequelle (z.B. die elektrische Energiequelle des elektronischen Bremssystems und/oder der elektrische Energiespeicher des Nutzfahrzeuganhängers) versorgt einen (direkt oder indirekt) angeschlossenen Verbraucher (z.B. den zumindest einen an die Steuereinheit angeschlossenen Verbraucher) mit einer Spannung (z.B. einer Gleichspannung) und einem Strom (z.B. einem Gleichstrom). Ein Beispiel für eine solche elektrische Energiequelle ist eine Spannungsquelle, die im Idealfall eine von dem angeschlossenen Verbraucher unabhängige Spannung und einen von dem angeschlossenen Verbraucher abhängigen Strom bereitstellt. Die von der elektrischen Energiequelle zu einem bestimmten Zeitpunkt bereitgestellte elektrische Leistung ist eine Funktion der durch die elektrische Energiequelle zu diesem Zeitpunkt bereitgestellten Spannung und des durch die elektrische Energiequelle zu diesem Zeitpunkt bereitgestellten Stroms und entspricht, wenn die bereitgestellte Spannung eine Gleichspannung und/oder der bereitgestellte Strom ein Gleichstrom ist, dem Produkt der bereitgestellten Spannung und des bereitgestellten Stroms. Die durch die elektrische Energiequelle über einen bestimmten Zeitraum bereitgestellte elektrische Energie ist eine Funktion der durch die elektrische Energiequelle in diesem Zeitraum bereitgestellten elektrischen Leistung und entspricht, wenn die bereitgestellte elektrische Leistung in diesem Zeitraum konstant ist, dem Produkt der bereitgestellten elektrischen Leistung und der Zeitspanne dieses Zeitraums.

Dementsprechend soll unter dem Bereitstellen einer elektrischen Energie zum Betreiben eines Verbrauchers (z.B. zum Betreiben des zumindest einen an die Steuereinheit angeschlossenen Verbrauchers) durch eine Energiequelle (z.B. die elektrische Energiequelle des elektronischen Bremssystems und/oder der elektrische Energiespeicher des Nutzfahrzeuganhängers) beispielsweise verstanden werden, dass die elektrische Energiequelle eine Spannung (z.B. eine Gleichspannung) und einen Strom (z.B. einen Gleichstrom) zum Betreiben des Verbrauchers (z.B. zum Betreiben des zumindest einen an die Steuereinheit angeschlossenen Verbrauchers) bereitstellt.

In dem zweiten Betriebszustand wird elektrische Energie zum Betreiben des zumindest einen Verbrauchers der Steuereinheit durch den elektrischen Energiespeicher des Nutzfahrzeuganhängers bereitgestellt.

In beispielhaften Ausführungsformen stellt der elektrische Energiespeicher eine Gleichspannung bereit. Ferner wird in beispielhaften Ausführungsformen dem elektrischen Energiespeicher zum Laden des elektrischen Energiespeichers eine Gleichspannung bereitgestellt. Ein Beispiel für einen solchen elektrischen Energiespeicher ist eine aufladbare Batterie wie eine aufladbare Hochvoltbatterie (z.B. in Form einer Metall-Hydrid-Batterie oder einer Lithium-Ionen-Batterie). Der elektrische Energiespeicher ist Teil des Nutzfahrzeuganhängers. Es versteht sich, dass der elektrische Energiespeicher zusätzlich Teil einer Komponente des Nutzfahrzeuganhängers, beispielsweise einer Transportkältemaschine, sein kann.

Die erste Spannungswandlervorrichtung ist eingerichtet, das mit der Energieversorgungsverbindung verbundene erste Massepotential von dem mit dem elektrischen Energiespeicher des Nutzfahrzeuganhängers verbundenen zweiten Massepotential zu entkoppeln. Hierbei ist Massepotential als Bezugspotential (z. B. Potential Null) für die jeweils anliegenden Spannungen zu verstehen. Mit anderen Worten ist das erste Massepotential ein Bezugspotential für eine an der Energieversorgungsverbindung anliegende Spannung und das zweite Massepotential ist ein Bezugspotential für eine Spannung des elektrischen Energiespeichers des Nutzfahrzeuganhängers. Die erste Spannungswandlervorrichtung ist mit anderen Worten eingerichtet, eine Potentialtrennung zwischen dem ersten Massepotential und dem zweiten Massepotential bereitzustellen. Einerseits ist eine solche Potentialtrennung vorteilhaft, da sie zu einem gesicherten störungsfreien Betrieb von mit den jeweiligen Massepotentialen verbundenen Verbrauchern (beispielsweise dem elektronischen Bremssystem einerseits, und dem zumindest einen an die Steuereinheit angeschlossenen Verbraucher andererseits) zumindest beiträgt.

Andererseits wird gemäß der vorliegenden Erfindung eine Entkopplung der Massepotentiale der elektrischen Energiequelle des elektronischen Bremssystems des Nutzfahrzeuganhängers und des elektrischen Energiespeichers des Nutzfahrzeuganhängers in der Steuereinheit selbst, beispielsweise in der BCU, bereitgestellt.

Die Steuereinheit ermöglicht es auf diese Weise, dass an die Steuereinheit angeschlossene Verbraucher, wie zum Beispiel das Telematiksystem und/oder ein elektronisches Schließsystem des Nutzfahrzeuganhängers elektrische Energie sowohl von der Energiequelle des elektronischen Bremssystems als auch von dem elektrischen Energiespeicher beziehen können, ohne dass eine separate Masseentkopplung in einem dieser Verbraucher selbst bereitgestellt werden muss. Im Gegenteil wird durch die Steuereinheit in vorteilhafter Weise eine zentrale Entkopplung der Massepotentiale bereitgestellt, wodurch insbesondere Anforderungen an Komplexität von an die Steuereinheit angeschlossenen Verbrauchern verringert wird.

In beispielhaften Ausführungsformen der Erfindung ist die erste Spannungswandlervorrichtung eine Gleichspannungswandlerschaltung (ein DC/DC Wandler), die eingerichtet ist, das erste, mit der Energieversorgungsverbindung verbundene, Massepotential von dem, mit dem elektrischen Energiespeicher des Nutzfahrzeuganhängers verbundenen, zweiten Massepotential galvanisch zu trennen. In einer beispielhaften Ausführungsform ist die erste Spannungswandlervorrichtung eine isolierte Gleichspannungswandlerschaltung. In einer beispielhaften Ausführungsform umfasst die erste Spannungswandlervorrichtung einen Sperrwandler (beispielsweise einen Flyback-Wandler), einen Flusswandler (beispielsweise einen Eintaktflusswandler, insbesondere einen Active Clamp Forward Converter), einen Gegentaktflusswandler, einen Flyback-Wandler, und/oder einen Resonanz-Wandler (beispielsweise einen LLC-Wandler).

In beispielhaften Ausführungsformen der Erfindung ist die erste Spannungswandlervorrichtung elektrisch mit der Energieversorgungsverbindung und mit dem zumindest einen Verbraucher verbunden. Hierbei kann die erste Spannungswandlervorrichtung direkt (nur über elektrische Verbindungen) oder indirekt (über jeweils eine oder mehrere elektronische Komponenten) mit der Energieversorgungsverbindung und/oder mit dem zumindest einen Verbraucher verbunden sein.

In beispielhaften Ausführungsformen ist die erste Spannungswandlervorrichtung eingerichtet, im ersten Betriebsmodus elektrische Energie in einer Richtung von der Energieversorgungsverbindung zu dem zumindest einen Verbraucher zu leiten, und dabei eine elektrische Spannung, die an der Energieversorgungsverbindung anliegt, in eine kleinere elektrische Spannung zu wandeln. Dabei ist die Spannungswandlervorrichtung in einer beispielhaften Ausführungsform eingerichtet, die Energie nur in dieser Richtung zu leiten. Beispielsweise kann die erste Spannungswandlervorrichtung eingerichtet sein, eine elektrische Spannung von 24V (Volt), die an der Energieversorgungsverbindung, und damit an dem elektronischen Bremssystem des Nutzfahrzeuganhängers, anliegt, in eine kleinere Spannung von 12V bis 14V zu wandeln. Die kleinere Spannung ist einerseits geeignet zum Betrieb von Verbrauchern wie dem Telematiksystem, und ist andererseits geeignet, um den Energiespeicher des Nutzfahrzeuganhängers, beispielsweise eine aufladbare Batterie, aufzuladen.

Im ersten Betriebsmodus wird in beispielhaften Ausführungsformen elektrische Energie zum Betreiben des zumindest einen Verbrauchers dem zumindest einen Verbraucher somit über die erste Spannungswandlervorrichtung bereitgestellt.

In beispielhaften Ausführungsformen der Erfindung umfasst das Steuersystem weiter eine zweite Spannungswandlervorrichtung, die elektrisch mit dem elektrischen Energiespeicher des Nutzfahrzeuganhängers und dem zumindest einen Verbraucher verbunden ist. Hierbei kann die zweite Spannungswandlervorrichtung direkt (nur über elektrische Verbindungen) oder indirekt (über jeweils eine oder mehrere elektronische Komponenten) mit dem elektrischen Energiespeicher des Nutzfahrzeuganhängers und/oder mit dem zumindest einen Verbraucher verbunden sein. Dabei wird in beispielhaften Ausführungsformen elektrische Energie zum Betreiben des zumindest einen Verbrauchers im zweiten Betriebsmodus dem zumindest einen Verbraucher über die zweite Spannungswandlervorrichtung bereitgestellt.

In beispielhaften Ausführungsformen ist die zweite Spannungswandlervorrichtung eine bidirektionale Gleichspannungswandlerschaltung. Dies soll derart verstanden werden, dass über die zweite Spannungswandlervorrichtung elektrische Energie in beide Richtungen (d.h. über die zweite Spannungswandlervorrichtung in einer Richtung von dem elektrischen Energiespeicher des Nutzfahrzeuganhängers zum Verbraucher und über die zweite Spannungswandlervorrichtung in einer Richtung von dem Verbraucher zu dem elektrischen Energiespeicher des Nutzfahrzeuganhängers) übertragen werden kann. Alternativ oder zusätzlich soll dies derart verstanden werden dass durch die zweite Spannungswandlervorrichtung Spannungen in beide Richtungen (d.h. über die zweite Spannungswandlervorrichtung in einer Richtung von dem elektrischen Energiespeicher des Nutzfahrzeuganhängers zum Verbraucher und über die zweite Spannungswandlervorrichtung in einer Richtung von dem Verbraucher zu dem elektrischen Energiespeicher des Nutzfahrzeuganhängers) umgewandelt werden können.

In beispielhaften Ausführungsformen der Erfindung umfasst die zweite Spannungswandlervorrichtung einen verbraucherseitigen Verbindungsknoten zum Herstellen einer elektrischen Verbindung zumindest mit dem zumindest einen Verbraucher und einen energiespeicherseitigen Verbindungsknoten zum Herstellen einer elektrischen Verbindung mit dem elektrischen Energiespeicher, wobei die zweite Spannungswandlervorrichtung für zumindest einen der folgenden Modi eingerichtet ist:
- Strom von dem energiespeicherseitigen Verbindungsknoten zu dem verbraucherseitigen Verbindungsknoten zu leiten, wobei eine Spannung am energiespeicherseitigen Verbindungsknoten einer Spannung am verbraucherseitigen Verbindungsknoten entspricht;
- dem elektrischen Energiespeicher über den energiespeicherseitigen Verbindungsknoten Strom zu entnehmen und über den verbraucherseitigen Verbindungsknoten weiterzuleiten, wobei eine Spannung am verbraucherseitigen Verbindungsknoten größer ist, als eine Spannung am energiespeicherseitigen Verbindungsknoten;
- Strom von dem verbraucherseitigen Verbindungsknoten über den energiespeicherseitigen Verbindungsknoten an den elektrischen Energiespeicher zu leiten, wobei eine Spannung am energiespeicherseitigen Verbindungsknoten kleiner ist, als eine Spannung am verbraucherseitigen Verbindungsknoten;
- dem elektrischen Energiespeicher Strom aus dem verbraucherseitigen Verbindungsknoten zuzuleiten ohne Senkung der Spannung zwischen verbraucherseitigen Verbindungsknoten und energiespeicherseitigen Verbindungsknoten.

Dabei soll unter einer elektrischen Verbindung eine Verbindung verstanden werden, über die elektrische Energie übertragen werden kann. Ein Beispiel für eine solche elektrische Verbindung ist eine elektrische Leitung, die bei Gleichspannung beispielsweise zwei elektrische Leiter aufweisen kann. Der erste und zweite Verbindungsknoten können dementsprechend beispielsweise als Anschlüsse für eine solche elektrische Leitung (z.B. mit zwei Leitern) ausgebildet sein.

Somit kann die Regelung insbesondere durch die zweite Spannungswandlervorrichtung zumindest ein oder mehrere der beschriebenen vier verschiedenen Betriebsmoden ermöglichen, wobei die zweite Spannungswandlervorrichtung weitere Betriebsmoden ermöglichen kann, die hier nicht beschrieben sind. Mit diesen vier Betriebsmoden wird es insbesondere möglich, dass in verschiedenen Szenarien, beispielsweise bei einem Spannungseinbruch an der Energiequelle des elektronischen Bremssystems beim Starten beispielsweise eines Dieselmotors eines Zugfahrzeugs, bei einer Tiefentladung der elektrischen Speichereinheit, und/oder bei einer vollständig geladenen elektrischen Speichereinheit eine am verbraucherseitigen Verbindungsknoten anliegende Spannung stabil ist. Dies trägt in vorteilhafter Weise dazu bei, dass ein stabiler und sicherer Betrieb von an die Steuereinheit angeschlossenen Verbrauchern gewährleistet werden kann.

In beispielhaften Ausführungsformen umfasst die zweite Spannungswandlervorrichtung einen Kaskadenregler, der einen inneren Regler umfasst, der eingerichtet ist, einen bidirektionalen Sollstrom einzustellen (ein Regelbereich kann beispielsweise durchgängig von -15A bis +15A gehen, ohne dass ein Betriebszustand umgeschaltet werden muss), und der einen äußeren Regler umfasst, der eingerichtet ist eine Sollspannung einzustellen. Ein solcher Regler hat sich als vorteilhaft erwiesen, um beispielsweise in den beschriebenen Szenarien eine stabile Spannung am verbraucherseitigen Verbindungsknoten der zweiten Spannungswandlervorrichtung, und damit für die Steuereinheit, zu gewährleisten. Somit wird es in vorteilhafter Weise möglich, das System der Steuereinheit zu stützen und zu stabilisieren.

In beispielhaften Ausführungsformen der Erfindung ist der elektrische Energiespeicher des Nutzfahrzeuganhängers eine aufladbare Batterie, insbesondere eine Metall-Hydrid-Batterie oder eine Lithium-Ionen-Batterie.

In beispielhaften Ausführungsformen der Erfindung umfasst der Nutzfahrzeuganhänger weiter eine Transportkältemaschine zum Kühlen eines Laderaums des Nutzfahrzeuganhängers. In einer beispielhaften Ausführungsform umfasst die Transportkältemaschine einen elektrischen Motor, wobei elektrische Energie zum Betreiben des elektrischen Motors durch eine aufladbare Batterie bereitgestellt wird (die zusätzlich zu dem elektrischen Energiespeicher vorgesehen sein kann).

Eine Transportkältemaschine kann beispielsweise gekühlte Luft erzeugen, die in einen Laderaum des Nutzfahrzeuganhängers geblasen wird. Zu diesem Zweck kann die Transportkältemaschine in beispielhaften Ausführungsformen einen Kühlkreis mit einem durch den elektrischen Motor angetriebenen Verdichter zum Verdichten eines Kühlmittels, einen Kondensator, eine Drosseleinrichtung und einen Wärmetauscher umfassen. In dem Kühlkreis strömt das von dem Verdichter verdichtete Kältemittel über den Kondensator und eine in Strömungsrichtung hinter dem Kondensator angeordnete Drosseleinrichtung, die beispielsweise als Stellventil ausgebildet sein kann, zu dem Wärmetauscher. In dem Wärmetauscher wird das zuvor verflüssigte Kältemittel expandiert und entzieht dabei einem getrennt von dem Kältemittel durch den Wärmetauscher geleiteten Luftstrom Wärme, so dass die Luft des Luftstroms gekühlt wird. Die gekühlte Luft dieses Luftstroms wird anschließend in den Laderaum des Nutzfahrzeuganhängers geblasen, um diesen zu kühlen.

In beispielhaften Ausführungsformen wird im ersten Betriebszustand der Steuereinheit und/oder in einem dritten Betriebszustand der Steuereinheit elektrische Energie zum Laden der aufladbaren Batterie über die Energieversorgungsverbindung bereitgestellt. Dies ist so zu verstehen, dass die Steuereinheit in beispielhaften Ausführungsformen so eingerichtet ist, (im ersten Betriebszustand der Steuereinheit) einen elektrischen Energiefluss von der Energieversorgungsverbindung so zu leiten, dass einerseits die Batterie aufgeladen wird, während der zumindest eine an die Steuereinheit angeschlossene Verbraucher elektrische Energie über die Energieversorgungsverbindung bezieht. Andererseits ist die Steuereinheit in beispielhaften Ausführungsformen alternativ oder zusätzlich so eingerichtet, (im dritten Betriebszustand der Steuereinheit) einen elektrischen Energiefluss von der Energieversorgungsverbindung so zu leiten, dass die Batterie aufgeladen wird, obwohl kein an die Steuereinheit angeschlossener Verbraucher elektrische Energie über die Energieversorgungsverbindung bezieht.

In beispielhaften Ausführungsformen umfasst der Nutzfahrzeuganhänger einen Generator, der von einem Verbrennungsmotor angetrieben wird, um elektrische Energie zu erzeugen, wobei der Generator mit dem elektrischen Energiespeicher des Nutzfahrzeuganhängers verbunden ist (beispielsweise über einen oder mehrere geeignete Spannungswandler), um den elektrischen Energiespeicher mit erzeugter elektrischer Energie aufzuladen. Alternativ oder zusätzlich umfasst der Nutzfahrzeuganhänger zumindest ein Solarpanel das zum Aufladen des elektrischen Energiespeichers des Nutzfahrzeuganhängers elektrisch mit dem elektrischen Energiespeicher des Nutzfahrzeuganhängers verbunden ist.

In beispielhaften Ausführungsformen ist die elektrische Energiequelle des elektronischen Bremssystems eine elektrische Energiequelle eines Zugfahrzeugs, mit der das Bordnetz zumindest im ersten Betriebszustand über die Energieversorgungsverbindung elektrisch verbunden ist. Beispielsweise kann die Energiequelle des Zugfahrzeugs eine Lichtmaschine des Zugfahrzeugs sein, die elektrische Energie erzeugt, wenn das Zugfahrzeug fährt und den Nutzfahrzeuganhänger zieht.

Insbesondere in diesem Zustand ist der Nutzfahrzeuganhänger einerseits mechanisch an das Zugfahrzeug gekoppelt. Andererseits ist in beispielhaften Ausführungsformen in diesem Zustand das Bordnetz des Nutzfahrzeuganhängers über die Energieversorgungsverbindung elektrisch mit der Lichtmaschine verbunden, so dass über die während der Fahrt erzeugte elektrische Energie die aufladbare Batterie des Nutzfahrzeuganhängers (des elektrischen Energiespeichers) geladen werden kann.

Alternativ oder zusätzlich kann die Energiequelle des Zugfahrzeugs eine aufladbare Batterie des Zugfahrzeugs sein.

Gemäß der vorliegenden Erfindung wird weitere ein System bereitgestellt, umfassend:
- den Nutzfahrzeuganhänger, und
- ein Zugfahrzeug.

In beispielhaften Ausführungsformen umfasst das Zugfahrzeug einen Lastkraftwagen (LKW) oder eine Sattelzugmaschine.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Ins-besondere sollen Merkmale, die in den Figuren enthalten sind, keineswegs als not-wendiger Bestandteil der vorliegenden Erfindung erachtet werden.

Es zeigen:
- Fig. 1: eine schematische Darstellung einer beispielhaften Ausführungsform eines Nutzfahrzeuganhängers gemäß der Erfindung;
- Fig. 2: eine schematische Darstellung einer beispielhaften Ausführungsform eines Bordnetzes gemäß der Erfindung.
- Fig. 3: eine schematische Darstellung einer beispielhaften Ausführungsform einer zweiten Spannungswandlervorrichtung.

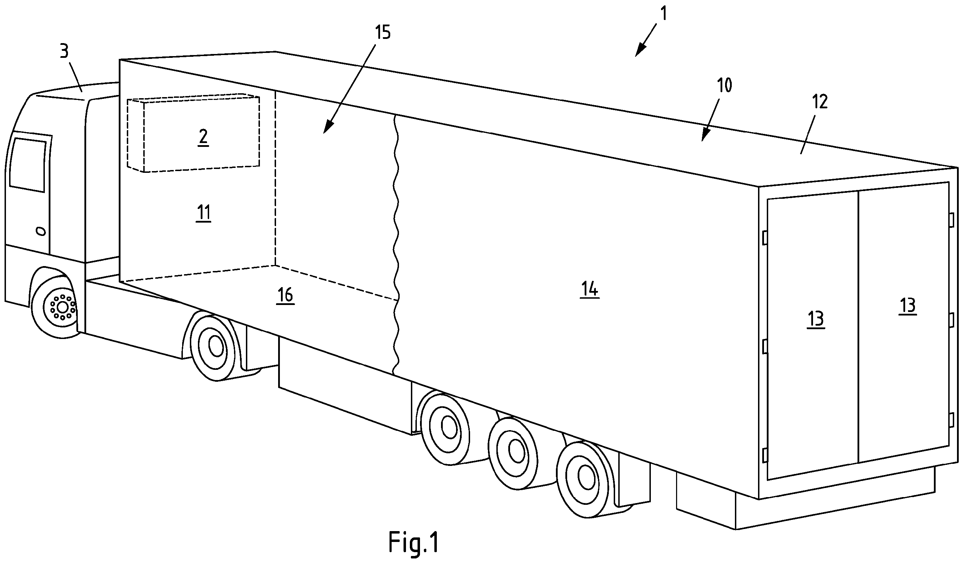

Fig. 1 ist eine schematische Darstellung einer beispielhaften Ausführungsform eines Nutzfahrzeugs 1 gemäß der Erfindung.

Der Nutzfahrzeuganhänger 1 ist ein Sattelauflieger 1 mit einem Kofferaufbau 10. Der Kofferaufbau 10 umfasst eine feste Stirnwand 11, ein festes Dach 12, eine durch Flügeltüren 13 gebildete Rückwand und feste Seitenwände 14. Der Kofferaufbau 10 umschließt dabei einen Laderaum 15 zur Aufnahme von zu transportierenden Gütern. Die vordere Seitenwand 14 ist in Fig. 1 teilweise geschnitten dargestellt, um den Blick in den Laderaum 15, auf den Ladeboden 16 und auf eine an der Stirnwand 11 montierte Transportkältemaschine 2 freizugeben, die lediglich schematisch dargestellt ist.

Die Transportkältemaschine 2 dient zum Kühlen des Laderaums 15, so dass temperaturempfindliche Güter in dem Laderaum 15 transportiert werden können. Zu diesem Zweck kann die Transportkältemaschine 2 beispielsweise Luft kühlen und anschließend in den Laderaum 15 blasen.

Ferner kann der Sattelauflieger einen elektrischen Generator 17 (nicht dargestellt) in Form eines Achsgenerators aufweisen, der durch die Drehung einer Achse des Sattelaufliegers 1 angetrieben wird und dementsprechend elektrische Energie in Form einer Wechselspannung (z.B. eine Dreiphasenwechselspannung mit einer Spannung in Höhe von 300V bis 540 V (z.B. 400 V) (Effektivwert der verketteten Spannungen)) erzeugt und/oder erzeugen kann, wenn sich der Sattelauflieger 1 in Fahrt befindet

Der Sattelauflieger 1 wird von einem Zugfahrzeug 3 gezogen, in der dargestellten beispielhaften Ausführungsform von einer Sattelzugmaschine 3.

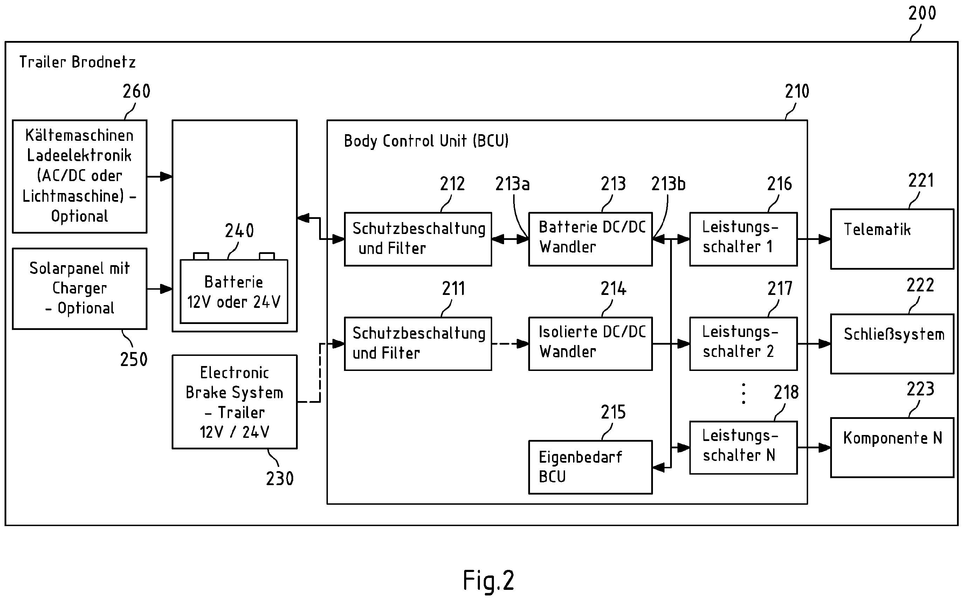

Fig. 2 ist eine schematische Darstellung einer beispielhaften Ausführungsform eines Bordnetzes 200 des Nutzfahrzeuganhängers 1.

Wie schematisch dargestellt, umfasst das Bordnetz einen elektrischen Energiespeicher 240 in Form einer aufladbaren Batterie 240 und ein elektronisches Bremssystem 230, wobei eine (nicht dargestellte) Energiequelle des elektronischen Bremssystems 230 und die aufladbare Batterie 240 als zwei Energiequellen des Bordnetzes 200 vorgesehen sind. Wie eingangs beschrieben, kann die Energiequelle des elektronischen Bremssystems 230 eine Energiequelle des Zugfahrzeugs 3, beispielsweise eine Lichtmaschine und/oder eine aufladbare Batterie des Zugfahrzeugs 3 umfassen und/oder eine Energiequelle des Nutzfahrzeuganhängers 1, wie zum Beispiel einen (nicht dargestellten) Generator des elektronischen Bremssystems 230. Insbesondere in dem Fall, dass die Energiequelle des elektronischen Bremssystem 230 eine Energiequelle des Zugfahrzeugs 3 umfasst, kann die Energieversorgungsverbindung ein (nicht dargestelltes) elektrisches Kopplungssystem des Nutzfahrzeuganhängers 1 an das Zugfahrzeug 3 umfassen.

Wie eingangs erwähnt, und in Fig. 2 dargestellt, kann die aufladbare Batterie 240 in beispielhaften Ausführungsformen eine Batterie der Transportkältemaschine 2 aus Fig. 1 sein. Zum Laden der Batterie 240 ist in einer beispielhaften Ausführungsformen ein Generator 260 wie beispielsweise eine Lichtmaschine 260 vorgesehen, der von einem (nicht dargestellten) Verbrennungsmotor angetrieben wird, um elektrische Energie zu erzeugen. Der Generator ist mit der Batterie 240 verbunden, um diese Energiespeicher mit erzeugter elektrischer Energie zu laden.

Wie weiter in Fig. 2 dargestellt, kann der Nutzfahrzeuganhänger 1 zumindest ein Solarpanel 250 umfassen, das zum Aufladen der Batterie 240 elektrisch mit der Batterie 240 verbunden ist.

Das Bordnetz 200 verfügt weiter ein Steuergerät 210, welches in der Ausführungsform gemäß Fig. 2 einer Body Control Unit (BCU) des Nutzfahrzeuganhängers 1 entspricht. Es versteht sich, dass das Steuereinheit 210 neben den dargestellten und im Folgenden beschriebenen elektronischen Komponenten weitere elektronische Komponenten umfassen kann.

Wie man Fig. 2 entnehmen kann, umfasst die Steuereinheit 210 eine erste Spannungswandlervorrichtung 214, die in der dargestellten Ausführungsform eine isolierte Gleichspannungswandlerschaltung 214 (beispielsweise einen Active Clamp Forward Converter) umfasst. Diese ist einerseits elektrisch mit dem elektronischen Bremssystem 230 verbunden und andererseits elektrisch mit dem zumindest einen Verbraucher verbunden, der in der dargestellten Ausführungsform ein Telematiksystem 221, ein elektronisches Schließsystem 222 und ggf. eine oder mehrere elektronische Komponenten 223 umfasst. So kann im ersten Betriebszustand der Steuereinheit 210 elektrische Energie zum Betreiben beispielsweise des Telematiksystems 221 und/oder des elektronischen Schließsystems 222 des Nutzfahrzeuganhängers 1 über eine (nicht dargestellte) Energieversorgungsverbindung bereitgestellt werden, über die das Bordnetz 200 zumindest in dem ersten Betriebszustand mit der (nicht dargestellten) elektrischen Energiequelle des elektronischen Bremssystems 230 des Nutzfahrzeuganhängers 1 verbunden ist.

Die isolierte Gleichspannungswandlerschaltung 214 ist so ausgestaltet, dass sie ein mit der Energieversorgungsverbindung und damit mit dem elektronischen Bremssystem 230 verbundenes erstes Massepotential von einem mit der aufladbaren Batterie 240 (dem elektrischen Energiespeicher) des Nutzfahrzeuganhängers 1 verbundenen zweiten Massepotential entkoppelt. Während hier in einer beispielhaften Ausführungsform eine vollständige galvanische Trennung vorgesehen ist, ist aber auch eine Gleichspannungswandlerschaltung denkbar, die keine perfekte Potentialtrennung bereitstellt. Die isolierte Gleichspannungswandlerschaltung 214 stellt so eine galvanische Potentialtrennung zwischen dem elektronischen Bremssystem 230 und der aufladbaren Batterie 240 bereit, was insbesondere zu einem sicheren und stabilen Betrieb des elektronischen Bremssystems 230 beiträgt. Die isolierte Gleichspannungswandlerschaltung 214 ist in einer beispielhaften Ausführungsform so ausgestaltet, dass sie elektrische Energie nur in einer Richtung von dem elektronischen Bremssystem 230 (und/oder von der nicht dargestellten Energieversorgungsverbindung) zu den Verbrauchern 221, 222, 223 leiten kann. Insbesondere ist die isolierte Gleichspannungswandlerschaltung 214 ist so ausgestaltet, dass sie eine am elektronischen Bremssystem 230 anliegende Spannung von beispielsweise 24V in eine Spannung von 12V bis 14V wandeln kann, die geeignet ist, einerseits die Verbraucher 221, 222, 223 zu betreiben, die andererseits aber auch geeignet ist, die Batterie 240 zu laden. Die Spannung, die von der isolierten Gleichspannungswandlerschaltung 214 bereitgestellt wird, ist weiter auch geeignet um die Steuereinheit 210 selbst zu betreiben, um den schematisch dargestellten Eigenbedarf 215 an elektrischer Energie bereitzustellen.

Mit dieser Möglichkeit der Potentialtrennung durch die isolierte Gleichspannungswandlerschaltung 214 ermöglicht es die Steuereinheit 210, dass an die Steuereinheit 210 angeschlossene Verbraucher, wie zum Beispiel das Telematiksystem 221 und/oder das elektrische Schließsystem 222, elektrische Energie sowohl von der Energiequelle des elektronischen Bremssystems 230 als auch aus der aufladbaren Batterie 240 beziehen können, ohne das eine separate Potential- oder Masseentkopplung im jeweiligen Verbraucher selbst vorgesehen sein muss. Eine so durch die isolierte Gleichspannungswandlerschaltung 214 bereitgestellte zentrale Masseentkopplung ermöglicht so Verbraucher von deutlich reduzierter Komplexität.

Wie man Fig. 2 weiter entnehmen kann, umfasst die Steuereinheit 210 eine zweite Spannungswandlervorrichtung 213, die über einen energiespeicherseitigen Verbindungsknoten 213a elektrisch mit der aufladbaren Batterie 240 des Nutzfahrzeuganhängers 1 verbunden ist und über einen verbraucherseitigen Verbindungsknoten 213b mit den Verbrauchern 221, 222, 223 verbunden ist. Dabei wird elektrische Energie zum Betreiben der Verbraucher 221, 222, 223 im zweiten Betriebsmodus der Steuereinheit 210 den Verbrauchern 221, 222, 223 über die zweite Spannungswandlervorrichtung 213 bereitgestellt. In dem zweiten Betriebsmodus der Steuereinheit 210 wird elektrische Energie zum Betreiben der Verbraucher 221, 222, 223 durch die aufladbare Batterie 240 des Nutzfahrzeuganhängers 1 bereitgestellt.

Die zweite Spannungswandlervorrichtung 213 ist in der dargestellten beispielhaften Ausführungsform eine bidirektionale Gleichspannungswandlerschaltung. Mit anderen Worten ist die zweite Spannungswandlervorrichtung 213 eingerichtet, elektrische Energie sowohl in einer Richtung von der aufladbaren Batterie 240 zu den Verbrauchern 221, 222, 223 zu leiten, als auch in umgekehrter Richtung hin zu der aufladbaren Batterie 240. So ist es beispielsweise möglich, elektrischen Strom von der Energiequelle des elektronischen Bremssystems 230 über die erste Spannungswandlervorrichtung 214 und über die zweite Spannungswandlervorrichtung 213 zu leiten und damit die aufladbare Batterie 240 aufzuladen. Andererseits ist es so möglich, elektrischen Strom aus der aufladbaren Batterie 240 über die zweite Spannungswandlervorrichtung 213 in Richtung der Verbraucher 221, 222, 223 zu leiten und damit die Verbraucher 221, 222, 223 zu betreiben.

Auf diese Weise wird es möglich, dass die aufladbare Batterie 240, die in der dargestellten Ausführungsform eine Batterie zum Betreiben einer Transportkältemaschine ist, kontinuierlich nachgeladen werden kann, beispielsweise wenn der Nutzfahrzeuganhänger 1 mit dem Zugfahrzeug 3 verbunden ist, und wenn die Energiequelle des elektronischen Bremssystems 230 eine Energiequelle des Zugfahrzeugs 3 ist. Auf diese Weise wird einem Verwender eine sehr hohe Verfügbarkeit einer Transportkältemaschine bereitgestellt, was Trockenfrachttransporte in einem Nutzfahrzeuganhänger mit Kühlfunktion begünstigt. Ein so mögliches kontinuierliches Aufladen der Batterie 240 ist weiter vorteilhaft, da ein regelmäßiges Laden der Batterie mit entsprechend verringerten Entladungszyklen der Batterie die Belastung der Batterie verringert. Dies kann insbesondere zu einer Erhöhung der Lebensdauer und einer Verlässlichkeit der Batterie 240 beitragen.

In einer beispielhaften Ausführungsform ist eine am verbraucherseitigen Verbindungsknoten 213b anliegende Spannung im Betrieb der Steuereinheit 210 gleich oder größer als eine am energiespeicherseitigen Verbindungsknoten 213a anliegende Spannung, die in der dargestellten Ausführungsform der Spannung der Batterie 240 der Transportkältemaschine entspricht. In einer beispielhaften Ausführungsform implementiert die zweite Spannungswandlervorrichtung 213 eine Push-Pull-Topologie.

In einer beispielhaften Ausführungsform umfasst die Steuereinheit 210 eine erste Schutzbeschaltung 211 und/oder einen ersten elektronischen Filter 211, über die die erste Spannungswandlervorrichtung 214, mit der Energieversorgungsverbindung und/oder dem elektronischen Bremssystem 230 verbunden ist. In einer beispielhaften Ausführungsform umfasst die Steuereinheit 210 eine zweite Schutzbeschaltung 212 und/oder einen zweiten elektronischen Filter 212, über die die zweite Spannungswandlervorrichtung 213, mit dem elektrischen Energiespeicher 240, insbesondere der aufladbaren Batterie 240, des Nutzfahrzeuganhängers 1 verbunden ist.

Auf diese Weise wird es in vorteilhafter Weise möglich, dass die erste Spannungswandlervorrichtung 214 und/oder die zweite Spannungswandlervorrichtung 213 gegen potentiell schädigende hohe Spannung geschützt ist/sind, die beispielsweise bei einem Abschalten von beteiligten elektronischen Komponenten auftreten können.

In einer beispielhaften Ausführungsform ist der zumindest eine Verbraucher, insbesondere direkt (ggf. nur über entsprechende elektrische Verbindungen), über einen entsprechenden zumindest einen Leistungsschalter mit der Steuereinheit verbunden. In einer beispielhaften Ausführungsform ist der zumindest eine Leistungsschalter direkt (ggf. nur über entsprechende elektrische Verbindungen) mit ersten Spannungswandlervorrichtung und/oder der zweiten Spannungswandlervorrichtung verbunden. Wie in Fig. 2 gezeigt, sind die Verbraucher 221, 222, 223 über entsprechende Leistungsschalter 216, 217, 218 mit der Steuereinheit 210 verbunden. Diese Leistungsschalter 216, 217, 218 können einerseits ein gezieltes Ansteuern einzelner Verbraucher ermöglichen, andererseits können mit diesen Schaltern ggf. auch hohe Leistungen geschaltet werden.

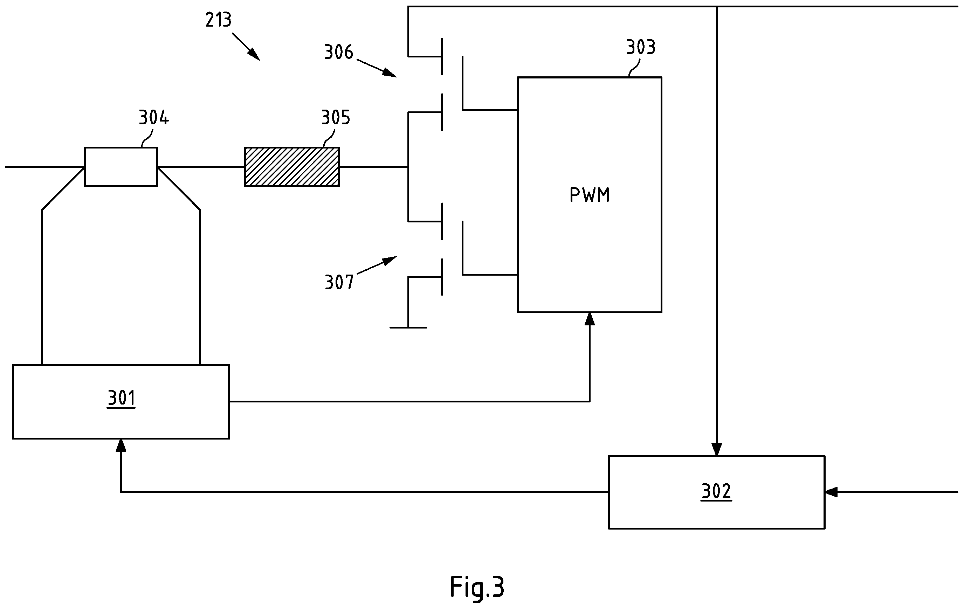

Fig. 3 zeigt eine beispielhafte Ausgestaltung einer zweiten Spannungswandlervorrichtung 213. Wie in Fig. 3 dargestellt umfasst die zweite Spannungswandlervorrichtung 213 einen Stromregler 301, einen Spannungsregler 302, eine Pulsweitenmodulationseinheit 303, einen ersten Transistor 306 und einen zweiten Transistor 307.

In einer beispielhaften Ausführungsform umfasst die zweite Spannungswandlervorrichtung 213 einen Kaskadenregler. Dabei ist der Stromregler 301 als innerer Regler eingerichtet, einen Sollstrom einzustellen und der Spannungsregler 302 ist als äußerer Regler eingerichtet, eine Spannung einzustellen, die insbesondere an den Verbrauchern 221, 222, 223 anliegt.

Wie eingangs beschrieben ermöglicht die zweite Spannungswandlervorrichtung 213 einen Betrieb in einem von zumindest vier Betriebsmodi. Die Spannungswandlervorrichtung 213 ist eingerichtet in einem ersten Betriebsmodus Strom von dem energiespeicherseitigen Verbindungsknoten 213a zu dem verbraucherseitigen Verbindungsknoten 213b zu leiten, wobei eine Spannung am energiespeicherseitigen Verbindungsknoten 213a einer Spannung am verbraucherseitigen Verbindungsknoten 213b entspricht.

In einem zweiten Betriebsmodus ist die zweite Spannungswandlervorrichtung 213 eingerichtet, dem elektrischen Energiespeicher 240, in der in Fig. 2 dargestellten Ausführungsform der aufladbaren Batterie 240, über den energiespeicherseitigen Verbindungsknoten 213a Strom zu entnehmen und über den verbraucherseitigen Verbindungsknoten 213b weiterzuleiten, wobei eine Spannung am verbraucherseitigen Verbindungsknoten 213b größer ist, als eine Spannung am energiespeicherseitigen Verbindungsknoten 213a.

In einem dritten Betriebsmodus ist die Spannungswandlervorrichtung 213 eingerichtet, Strom von dem verbraucherseitigen Verbindungsknoten 213b über den energiespeicherseitigen Verbindungsknoten 213a an den elektrischen Energiespeicher 240, in der in Fig. 2 dargestellten Ausführungsform der aufladbaren Batterie 240, zu leiten, wobei eine Spannung am energiespeicherseitigen Verbindungsknoten 213a kleiner ist, als eine Spannung am verbraucherseitigen Verbindungsknoten 213b.

Hierdurch wird es in vorteilhafter Weise möglich, dass die Steuereinheit 210 in verschiedenen Situationen eine stabile und sichere Spannung am verbraucherseitigen Verbindungsknoten 213b gewährleisten kann, beispielsweise bei einem Spannungseinbruch an der Energiequelle des elektronischen Bremssystems beim Starten beispielsweise eines Dieselmotors eines Zugfahrzeugs, bei einer Tiefentladung der elektrischen Speichereinheit, und/oder bei einer vollständig geladenen elektrischen Speichereinheit. Dies trägt in vorteilhafter Weise dazu bei, dass ein stabiler und sicherer Betrieb von den an die Steuereinheit angeschlossenen Verbrauchern 221, 222, 223 gewährleistet werden kann. Insbesondere ermöglicht es die Ausgestaltung der zweiten Spannungswandlervorrichtung 213, dass diese vier Betriebsmodi kontinuierlich ohne Umschaltvorgänge umgesetzt werden können.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Nutzfahrzeuganhänger (1) mit einem Bordnetz (200), wobei das Bordnetz (200) eine Steuereinheit (210) mit einer ersten Spannungswandlervorrichtung (214) umfasst, wobei elektrische Energie zum Betreiben zumindest eines an die Steuereinheit (210) angeschlossenen Verbrauchers (221, 222, 223) in einem ersten Betriebszustand der Steuereinheit (210) über eine Energieversorgungsverbindung bereitgestellt wird, über die das Bordnetz (200) zumindest im ersten Betriebszustand mit einer elektrischen Energiequelle eines elektronischen Bremssystems (230) des Nutzfahrzeuganhängers (1) verbunden ist, wobei elektrische Energie zum Betreiben des zumindest einen Verbrauchers (221, 222, 223) in einem zweiten Betriebszustand der Steuereinheit (210) durch einen elektrischen Energiespeicher (240) des Nutzfahrzeuganhängers (1) bereitgestellt wird, und wobei die erste Spannungswandlervorrichtung (214) eingerichtet ist:
- ein mit der Energieversorgungsverbindung verbundenes erstes Massepotential von einem mit dem elektrischen Energiespeicher (240) des Nutzfahrzeuganhängers (1) verbundenen zweiten Massepotential zu entkoppeln.

2. Nutzfahrzeuganhänger (1) mit einem Bordnetz (200) nach Anspruch 1, wobei die erste Spannungswandlervorrichtung (214) eine Gleichspannungswandlerschaltung ist, die eingerichtet ist, das erste Massepotential von dem zweiten Massepotential galvanisch zu trennen.

3. Nutzfahrzeuganhänger (1) mit einem Bordnetz (200) nach einem der Ansprüche 1 bis 2, wobei die erste Spannungswandlervorrichtung (214) elektrisch mit der Energieversorgungsverbindung und mit dem zumindest einen Verbraucher (221, 222, 223) verbunden ist, und eingerichtet ist, im ersten Betriebsmodus elektrische Energie in einer Richtung von der Energieversorgungsverbindung zu dem zumindest einen Verbraucher (221, 222, 223) zu leiten, und dabei eine elektrische Spannung, die an der Energieversorgungsverbindung anliegt, in eine kleinere elektrische Spannung zu wandeln.

4. Nutzfahrzeuganhänger (1) mit einem Bordnetz (200) nach einem der Ansprüche 1 bis 3, wobei das Steuersystem weiter eine zweite Spannungswandlervorrichtung (213) umfasst, die elektrisch mit dem elektrischen Energiespeicher (240) des Nutzfahrzeuganhängers (1) und dem zumindest einen Verbraucher (221, 222, 223) verbunden ist, wobei elektrische Energie zum Betreiben des zumindest einen Verbrauchers (221, 222, 223) im zweiten Betriebsmodus dem zumindest einen Verbraucher (221, 222, 223) über die zweite Spannungswandlervorrichtung (213) bereitgestellt wird.

5. Nutzfahrzeuganhänger (1) mit einem Bordnetz (200) nach Anspruch 4, wobei die zweite Spannungswandlervorrichtung (213) eine bidirektionale Gleichspannungswandlerschaltung ist, die eingerichtet ist, elektrische Energie sowohl in einer Richtung von dem elektrischen Energiespeicher (240) des Nutzfahrzeuganhängers (1) zu dem zumindest einen Verbraucher (221, 222, 223), als auch in einer Richtung zu dem elektrischen Energiespeicher (240) des Nutzfahrzeuganhängers (1) zu leiten.

6. Nutzfahrzeuganhänger (1) mit einem Bordnetz (200) nach einem der Ansprüche 4 bis 5, wobei die zweite Spannungswandlervorrichtung (213) einen verbraucherseitigen Verbindungsknoten (213b) zum Herstellen einer elektrischen Verbindung zumindest mit dem zumindest einen Verbraucher (221, 222, 223) und einen energiespeicherseitigen Verbindungsknoten (213a) zum Herstellen einer elektrischen Verbindung mit dem elektrischen Energiespeicher (240) umfasst, wobei die zweite Spannungswandlervorrichtung (213) zumindest für einen der folgenden Modi:
- Strom von dem energiespeicherseitigen Verbindungsknoten (213a) zu dem verbraucherseitigen Verbindungsknoten (213b) zu leiten, wobei eine Spannung am energiespeicherseitigen Verbindungsknoten (213a) einer Spannung am verbraucherseitigen Verbindungsknoten (213b) entspricht;
- dem elektrischen Energiespeicher (240) über den energiespeicherseitigen Verbindungsknoten (213a) Strom zu entnehmen und über den verbraucherseitigen Verbindungsknoten (213b) weiterzuleiten, wobei eine Spannung am verbraucherseitigen Verbindungsknoten (213b) größer ist, als eine Spannung am energiespeicherseitigen Verbindungsknoten (213a);
- Strom von dem verbraucherseitigen Verbindungsknoten (213b) über den energiespeicherseitigen Verbindungsknoten (213a) an den elektrischen Energiespeicher (240) zu leiten, wobei eine Spannung am energiespeicherseitigen Verbindungsknoten (213a) kleiner ist, als eine Spannung am verbraucherseitigen Verbindungsknoten (213b)
- dem elektrischen Energiespeicher Strom aus dem verbraucherseitigen (213b) Verbindungsknoten zuzuleiten ohne Senkung der Spannung zwischen verbraucherseitigen Verbindungsknoten (213b) und energiespeicherseitigen Verbindungsknoten (213a).

7. Nutzfahrzeuganhänger (1) mit einem Bordnetz (200) nach einem der Ansprüche 4 bis 6, wobei die zweite Spannungswandlervorrichtung (213) einen Kaskadenregler umfasst, der einen inneren Regler (301) umfasst, der eingerichtet ist, einen Sollstrom einzustellen, und der einen äußeren Regler (302) umfasst, der eingerichtet ist eine Sollspannung einzustellen.

8. Nutzfahrzeuganhänger (1) mit einem Bordnetz (200) nach einem der Ansprüche 1 bis 7, wobei der elektrische Energiespeicher (240) des Nutzfahrzeuganhängers (1) eine aufladbare Batterie (240) ist.

9. Nutzfahrzeuganhänger (1) mit einem Bordnetz (200) nach Anspruch 8, wobei im ersten Betriebszustand der Steuereinheit (210) und/oder in einem dritten Betriebszustand der Steuereinheit (210) elektrische Energie zum Laden der aufladbaren Batterie (240) über die Energieversorgungsverbindung bereitgestellt wird.

10. Nutzfahrzeuganhänger (1) mit einem Bordnetz (200) nach einem der Ansprüche 1 bis 9, ferner umfassend eine Transportkältemaschine (2) zum Kühlen eines Laderaums des Nutzfahrzeuganhängers (1).

11. Nutzfahrzeuganhänger (1) mit einem Bordnetz (200) nach einem der Ansprüche 1 bis 10, wobei die elektrische Energiequelle des elektronischen Bremssystems (230) eine elektrische Energiequelle eines Zugfahrzeugs (2) ist, mit der das Bordnetz (200) zumindest im ersten Betriebszustand über die Energieversorgungsverbindung elektrisch verbunden ist.

12. Nutzfahrzeuganhänger (1) mit einem Bordnetz (200) nach einem der Ansprüche 1 bis 11, wobei die elektrische Energiequelle des elektronischen Bremssystems (230) eine elektrische Energiequelle des Nutzfahrzeuganhängers (1), insbesondere ein elektrischer Generator.

13. Nutzfahrzeuganhänger (1) mit einem Bordnetz (200) nach einem der Ansprüche 1 bis 12, wobei der zumindest eine Verbraucher ein Telematiksystem des Nutzfahrzeuganhängers (1) und/oder ein elektronisches Schließsystem des Nutzfahrzeuganhängers (1) umfasst.

14. Nutzfahrzeuganhänger (1) mit einem Bordnetz (200) nach einem der vorangehenden Ansprüche 1 bis 13, wobei der Nutzfahrzeuganhänger (1) ein Sattelauflieger ist.

15. System umfassend
- den Nutzfahrzeuganhänger (1) gemäß einem der Ansprüche 1 bis 14, und
- ein Zugfahrzeug (2).
